Europäisches Patentamt

European Patent Office

Office européen des brevets

(11) Veröffentlichungsnummer: **0 167 803 B1**

# EUROPÄISCHE PATENTSCHRIFT

(45) Veröffentlichungstag der Patentschrift: **22.04.92**

(51) Int. Cl.5: **H02K 29/08**, H02P 6/02

(21) Anmeldenummer: **85106815.5**

(22) Anmeldetag: **03.06.85**

(54) **Kollektorloser Dreiphasen-Gleichstrommotor.**

(30) Priorität: **01.06.84 CH 2680/84**
**09.01.85 CH 78/85**

(43) Veröffentlichungstag der Anmeldung:
**15.01.86 Patentblatt 86/03**

(45) Bekanntmachung des Hinweises auf die
Patenterteilung:
**22.04.92 Patentblatt 92/17**

(84) Benannte Vertragsstaaten:
**DE FR GB IT NL SE**

(56) Entgegenhaltungen:
**EP-A- 0 040 484**
**DE-A- 3 122 049**
**DE-A- 3 151 257**
**DE-A- 3 432 372**

**PATENT ABSTRACTS OF JAPAN, Band 5, Nr.
30 (E-47)[702], 24. Februar 1981; & JP - A - 55
157 968 (TOKYO SHIBAURA DENKI K.K.)
09.12.1980**

**Rolf F. Fischer:"Elektrische Maschinen", Carl
Hanser Verlag München Wien, 1977, 2. Auflage; Seiten 32-34**

**Electro-Craft Corporation:"DC Motors Speed**

**Controls Servo Systems", 1975, Seite 2.10**

(73) Patentinhaber: **PAPST-MOTOREN GmbH & Co.
KG**
**Karl-Maier-Strasse 1 Postfach 35**
**W-7742 St. Georgen/Schwarzwald 1(DE)**

(72) Erfinder: **von der Heide, Johann, Dipl.-Ing.**
**Marktstrasse 15**
**W-7230 Schramberg(DE)**

(74) Vertreter: **Schwan, Gerhard, Dipl.-Ing.**
**Elfenstrasse 32**
**W-8000 München 83(DE)**

## Beschreibung

Die Erfindung betrifft einen kollektorlosen Dreiphasen-Gleichstrommotor mit einer Permanentmagnetanordnung und einer dreisträngigen Wicklung, die gegeneinander bewegbar sind, sowie mit drei mit Bezug auf die Wicklung feststehenden, von der Permanentmagnetanordnung gesteuerten Positionssensoren zum Anliefern von Sensorausgangssignalen, die jeweils während $180°_{el}$ auf einem ersten Potential und während der anschließenden $180°_{el}$ auf einem zweiten Potential liegen, wobei die Wicklungsspulen in Abhängigkeit von den um $120°_{el}$ gegeneinander versetzten Sensorausgangssignalen in zyklischer Folge mit Strom beaufschlagt werden, und wobei aufgrund der gegenseitigen Bewegung der Permanentmagnetanordnung und der Wicklung von der Permanentmagnetanordnung in den einzelnen Wicklungsspulen um $120°_{el}$ versetzte Spulenspannungen induziert werden, die unter Durchlaufen von Nulldurchgängen wechselweise in einem Bereich von maximal $180°_{el}$ positiv und in einem Bereich von maximal $180°_{el}$ negativ sind und deren Summe in jeder Relativstellung zwischen der Magnetanordnung und der Wicklung gleich Null ist.

Gleichstrommotore dieser Art sind in Form von Rotationsmotoren aus der DE-A-3 122 049 sowie in Form von Linearmotoren aus der DE-A-3 123 441 bekannt.

Bei den bekannten Motoren werden die Permanentmagnetpole von einem Permanentmagnetring mit annähernd trapezförmiger Radialmagnetisierung oder einer Folge von gleichmäßig verteilten, radial magnetisierten Magnetsegmenten gebildet, und die Pole des genuteten Flußführungsteils sind im Querschnitt im wesentlichen T-förmig gestaltet. Die Spulen sind überlappungsfrei um je einen Pol eines genuteten Flußführungsteils gelegt. Das Verhältnis von Spulenteilung zu Magnetteilung beträgt 2:3. Die Nutöffnungen zwischen Polschuhen des genuteten Flußführungsteils sind zwischen $3°_{el}$ und $30°_{el}$ breit, während die Magnetpolbreite zwischen wenigstens angenähert $120°_{el}$ und maximal $180°_{el}$ beträgt. In den einzelnen Wicklungsspulen werden getreppte Spannungen induziert, die über etwa $120°_{el}$ positiv, über etwa $60°_{el}$ nahezu Null und über etwa $120°_{el}$ negativ sind. Bei den bekannten Motoren hat man die Positionssensoren mit Bezug auf die Wicklungsspulen derart ausgerichtet, daß ihr Umschaltpunkt im wesentlichen in der Mitte der Flanke der induzierten Spannung beim Übergang von dem $60°$-Nullspannungsbereich auf den positiven Bereich liegt. Für diesen Zweck waren die Positionssensoren entweder auf die Mitte der Nutöffnungen zwischen den Polschuhen des genuteten Flußführungsteils oder auf die Symmetrieachse der Pole des Flußführungsteils ausgerichtet. Zwischen die Ausgänge der Positionssensoren und eine die Wicklung bestromende Endstufe war ein Decoder geschaltet, der dafür sorgte, daß von den Wicklungsspulen jeweils zwei mit Strom beaufschlagt wurden, während gleichzeitig in die betreffenden Spulen gemäß den $120°_{el}$-Bereichen Spannung induziert wurde.

Die bekannte Lösung führt zu einem hohen Wirkungsgrad verbunden mit einfacher Wicklungsausbildung. Ein Nachteil ist jedoch, daß im Kommutierungsbereich das Drehmoment kurzzeitig auf etwa 75 % oder weniger des Drehmomentspitzenwertes absinkt. Kommutierungsfehler, die insbesondere bei Kleinen Motoren stark ins Gewicht fallen, können in der Praxis zu Drehmomenteinbrüchen auf 50 bis 60 % des Spitzenwerts führen. Dies ist bei vielen Anwendungen äußerst unerwünscht.

Es ist ferner ein kollektorloser Gleichstrommotor bekannt (EP-A-0 040 484), dessen Stator in zwei Nuten zwei über eine Kommutatorschaltung wechselweise für jeweils $180°$ mit Strom beaufschlagte Spulen trägt und dessen permanentmagnetischer Rotor mit zwei Erregermagneten ausgestattet ist, die jeweils eine Umfangserstreckung von $150°$ haben. Die Kommutierung wird mittels der Erregermagnete selbst gesteuert. Um dabei die Stromzufuhr zu den beiden Spulen nach jeweils $180°$ umzuschalten, ist zusätzlich zu einem mit der Mitte der einen Nutöffnung ausgerichteten Hallschalter ein zweiter Hallschalter $30°$ voreilend angeordnet, wobei die beiden Hallschalter derart miteinander verkoppelt sind, daß an einem dem Ein- und Ausschalten der Spulenströme dienenden gemeinsamen Ausgang des Hallschalterpaares ein logischer Signalpegel "1" nur dann auftritt, wenn beide Hallschalter auf ihrem positiven Spannungspegel liegen, während an diesem Ausgang der logische Signalpegel "0" erscheint, wenn entweder einer oder beide Hallschalter auf ihrem Nullspannungspegel liegen. Dies bewirkt, daß der Signalpegel am Ausgang des Hallschalterpaares nach jeweils $180°$ wechselt, obwohl die die Hallschalter steuernden Erregermagnete selbst nur $150°$ breit sind.

Desweiteren ist ein kollektorloser Synchronantrieb bekannt (DE-A-3 151 257), dessen Drehzahl durch eine Antriebsfrequenz mit Hilfe einer Steuerschaltung steuerbar ist, der drei in Sternschaltung liegende Wicklungsspulen aufweist und bei dem den Wicklungsspulen Strom- oder Steuerimpulse zugeführt werden, deren Größe und Richtung aus einem Vergleich der von Sensoren erfaßten Winkelstellung des Rotors und einem aus der Antriebsfrequenz abgeleiteten Signal erfolgt.

Der Erfindung liegt die Aufgabe zugrunde, einen Motor der eingangs genannten Art derart weiterzubilden, daß er ein Drehmoment mit erheblich verbesserter Konstanz abgibt.

Es wurde überraschend gefunden, daß diese Aufgabe erfindungsgemäß einfach dadurch gelöst werden kann, daß die Positionssensoren mit Bezug auf die Wicklungsspulen derart angeordnet sind, daß die Änderungen der Sensorschaltzustände mit den Nulldurchgängen der zugeordneten induzierten Spulenspannungen im wesentlichen zusammenfallen, und daß die Wicklungsspulen über Wicklungstreiberstufen mit den Sensorausgangssignalen unmittelbar entsprechenden oder aus den Sensorausgangssignalen abgeleiteten Treiberspannungen beaufschlagt sind.

Bei diesem Motoraufbau sind die Drehmomentschwankungen theoretisch gleich Null. In der Praxis läßt sich selbst bei den in dieser Hinsicht kritischen kleinen Motoren die Drehmomentschwankung ohne weiteres auf einen wert von etwa ± 5 % bis 7 % vom Maximaldrehmoment herunterdrücken.

Die Wicklungsspulen können in Stern geschaltet sein; in diesem Fall lassen sich die Wicklungstreiberstufen an die Positionssensoren unmittelbar ankoppeln. Der Schaltungsaufwand ist besonders klein, denn es ist keine Decodierung zwischen den Ausgängen der Positionssensoren und der für die Bestromung der Wicklung vorgesehenen Endstufe notwendig. Weil ferner die Umschaltung der Wicklungsspulen in einem Bereich erfolgt, wo von der betreffenden Spule praktisch kein Drehmoment erzeugt wird, sind auch die Kommutierungsgeräusche geringer.

Die Wicklungsspulen können aber auch in Dreieck geschaltet sein; dann ist zwischen die Positionssensoren und die Wicklungstreiberstufen ein Decoder geschaltet, der bewirkt, daß die Treiberspannungen während jeweils zweier aufeinanderfolgender $180°_{el}$-Halbperioden der Sensorausgangssignale jeweils für $120°_{el}$ positiv und für $120°_{el}$ negativ sind und während der verbleibenden $60°_{el}$-Bereiche zwischen aufeinanderfolgenden $120°_{el}$-Bereichen die betreffende Wicklungsanschlußklemme abgeschaltet, also potentialfrei ist.

Der Gleichstrommotor nach der Erfindung kann einen im wesentlichen zylindrischen Luftspalt haben, und die Permanentmagnetanordnung kann dabei Teil eines Außenrotors sein. Der Motor läßt sich aber auch als Linearmotor mit im wesentlichen ebenem Luftspalt auslegen. Ein besonders einfacher Aufbau wird mit einem vierpoligen Rotor erhalten.

In bevorzugter weiterer Ausgestaltung der Erfindung sind die einzelnen Wicklungsspulen jeweils um einen Pol eines zusammen mit der Permanentmagnetanordnung einen Luftspalt bildenden genuteten Flußführungsteils mit zur Bewegungsrichtung bzw. zur Tangente an die jeweilige Bewegungsrichtung senkrecht stehender Spulenachse überlappungsfrei herumgelegt, beträgt das Verhältnis von Spulenteilung zu Magnetteilung 2:3 und sind die einzelnen induzierten Spulenspannungen dreistufig getreppte Spannungen, die jeweils über etwa $120°_{el}$ positiv, über etwa $60°_{el}$ gleich oder nahezu gleich Null und über etwa $120°_{el}$ negativ sind, wobei die Positionssensoren so angeordnet sind, daß sie ihren Schaltzustand im wesentlichen in der Mitte des $60°_{el}$-Nullspannungsbereichs der zugeordneten induzierten Spannung ändern.

Der Gleichstrommotor nach der Erfindung ist grundsätzlich überall dort geeignet, wo es auf ein konstantes Motordrehmoment ankommt. Eine bevorzugte Anwendung findet er für den Antrieb von signalverarbeitenden Geräten, insbesondere Plattenspeichern. Bei einem Festplattenspeicher mit einer Nabe zur Aufnahme mindestens einer z.B. magnetischen Festspeicherplatte ist der Gleichstrommotor nach der Erfindung vorteilhaft mindestens zu einem wesentlichen Teil innerhalb der Habe untergebracht. Eine solche Unterbringung führt zu einem besonders gedrängten Aufbau. Sie wird durch die hohe Drehmomentkonstanz möglich, weil dies erlaubt, den Motor auf ein kleineres Nenndrehmoment auszulegen, als es bei Motoren der Fall ist, bei denen große Drehmomentschwankungen auftreten.

Wegen seiner hervorragenden Drehmomentkonstanz eignet sich der vorliegend erläuterte Gleichstrommotor ferner besonders auch als direkt antreibender Kapstan- und/oder Wickelmotor für Magnetbandgeräte.

Die Erfindung ist im folgenden anhand von bevorzugten Ausführungsbeispielen näher erläutert. In den beiliegenden Zeichnungen zeigen:

Fig. 1    einen Schnitt durch einen Gleichstrommotor nach der Erfindung entlang der Linie I-I der Fig. 2,

Fig. 2    einen schematischen Schnitt entlang der Linie II-II der Fig. 1 bei Anwendung des Motors für den Antrieb eines magnetischen Festplattenspeichers,

Fig. 3    ein Prinzipschaltbild eines mit einem Motor gemäß den Fign. 1 und 2 ausgestatteten Antriebs, wobei die Wicklungsspulen des Motors in Stern geschaltet sind,

Fig. 4    eine Folge von Signalen bzw. Spannungen, wie sie bei einem Motor gemäß den Fign. 1 bis 3 auftreten,

Fig. 5    ein Prinzipschaltbild eines mit einem Motor gemäß den Fign. 1 und 2 ausgestatteten Antriebs, wobei die Wicklungsspulen in Dreieck geschaltet sind, und

Fig. 6    einen Signalplan ähnlich Fig. 4 für den Motor gemäß den Fign. 1, 2 und 5.

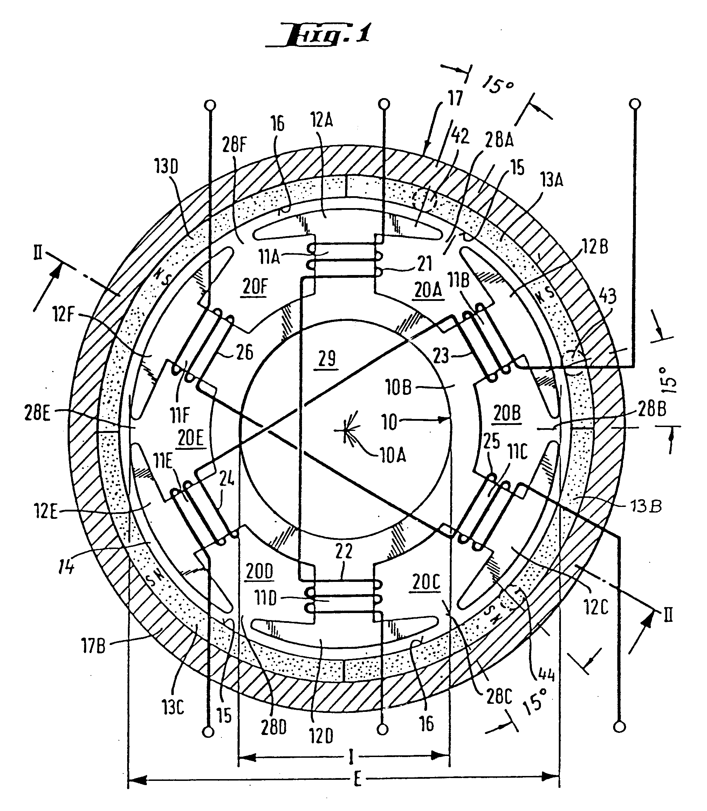

In den Fign. 1 und 2 ist das Statorblechpaket

eines dreisträngigen kollektorlosen Gleichstromaußenläufermotors mit 10 bezeichnet. Das Statorblechpaket 10 ist radialsymmetrisch mit Bezug auf eine Mittelachse 10A, und es weist einen ringförmigen Mittelabschnitt 10B auf. Es bildet sechs Statorpole 11A bis 11F, die im Querschnitt im wesentlichen T-förmig gestaltet und in einem gegenseitigen Winkelabstand von 60° angeordnet sind. An Stelle eines Blechpakets kann beispielsweise ein Sintereisenkern vorgesehen werden. Die Polschuhe 12A bis 12F der Statorpole bestimmen zusammen mit einem Permanentmagnetring 13 einen im wesentlichen zylindrischen Luftspalt 14. Der Permanentmagnetring 13 ist in der angedeuteten Weise in Umfangsrichtung vierpolig radial magnetisiert, d.h. er weist vier Abschnitte 13A bis 13D auf, und an der dem Luftspalt 14 zugewendeten Innenseite des Permanentmagnetrings 13 befinden sich in wechselnder Folge zwei magnetischen Nord- und zwei magnetische Südpole 15 bzw. 16. Die Pole 15, 16 haben im dargestellten Ausführungsbeispiel eine Breite von im wesentlichen 180°el - (entsprechend 90° physikalisch). Es wird auf diese Weise in Umfangsrichtung des Luftspalts 14 eine annähernd rechteckige oder trapezförmige Magnetisierung erhalten. Der Permanentmagnetring 13 ist in einer den magnetischen Rückschluß bildenden Außenläuferglocke 17 angebracht, z.B. in diese Glocke eingeklebt. Die das Rotorgehäuse bildende Außenläuferglocke 17 weist eine Stirnwand 17A und eine zylindrische Umfangswand 17B auf. Bei dem Permanentmagnetring 13 kann es sich insbesondere um einen Gummimagneten oder einen kunststoffgebundenen Magneten handeln. An Stelle eines einteiligen Permanentmagnetrings 13 können in die Glocke 17 auch schalenförmige Magnetsegmente eingeklebt oder dort auf andere Weise festgelegt sein. Besonders geeignete Werkstoffe für den Magnetring bzw. die Magnetsegmente sind magnetischer Werkstoff in einem synthetischen Bindemittel, ein Gemisch aus Hartferrit und elastomerem Material, keramischer Magnetwerkstoff oder Samariumkobalt. Während sich im dargestellten Ausführungsbeispiel jeder der Pole 15, 16 über 180°el erstreckt, kann auch mit schmaleren Polen gearbeitet werden. Im Interesse hoher Motorleistung soll die Rotorpolbreite aber mindestens 120°el betragen.

Die Statorpole 11A bis 11F begrenzen insgesamt sechs Statornuten 20A bis 20F. In diese Nuten ist eine dreisträngige Statorwicklung eingelegt. Jeder der drei Stränge umfaßt dabei zwei 120°el-gesehnte Spulen 21, 22; 23, 24 und 25, 26, von denen jede jeweils um einen der Statorpole 11A bis 11F herumgewickelt ist. Die beiden in Reihe geschalteten Spulen jedes Stranges liegen, wie dargestellt, einander jeweils diametral gegenüber. Die Spulen sind in nicht veranschaulichter Weise vorzugsweise bifilar gewickelt. Wie die schematische Darstellung der Fig. 1 erkennen läßt, wird jede Überlappung zwischen den Spulen 21 bis 26 vermieden. Es werden auf diese Weise besonders kurze Wickelköpfe 27 (Fig. 2) erhalten. Die Nutöffnungen 23A bis 28F können zwischen 3°el und 30°el breit sein. Bei der vorgesehenen Ausgestaltung der Statorwicklungen lassen sich die Nuten 20A bis 20F hervorragend füllen. Verschlüsse für die Nutöffnungen 28A bis 28F sind in aller Regel nicht notwendig.

Der vorliegende Motoraufbau gestattet die Erzielung eines relativ großen Statorinnenlochs 29, weil die Tiefe der Statornuten 20A bis 20F vergleichsweise gering gehalten werden kann. Es lassen sich ohne weiteres Verhältnisse zwischen dem Durchmesser I des Innenlochs 29 und dem Statoraußendurchmesser E im Bereich der Polschuhe 12 von mindestens 0,35 erzielen. Vorzugsweise liegt der Wert von I/E im Bereich von 0,4 bis 0,7. Das Verhältnis L/D zwischen der axialen Länge L des Statoreisens und dem maximalen Durchmesser D des Luftspalts 14 ist vorzugsweise gleich oder kleiner als 1. Diesen Abmessungsverhältnissen kommt besondere Bedeutung im Hinblick auf eine stabile Lagerung des Rotors zu. Eine solche Lagerung ist beispielsweise im Falle von Antrieben für Plattenspeichersysteme von hervorragender Wichtigkeit. Außerdem wird der Gesamtwiderstand der Statorwicklung besonders klein gehalten.

Zur Lagerung des Rotors ist gemäß Fig. 2 in der Mitte der Außenläuferglocke 17 eine Stummelwelle 32 befestigt, die über axial in Abstand voneinander liegende Kugellager 33 in einer zylindrischen Hülse 34 abgestützt ist, welche das Statorblechpaket 10 trägt und auf einem Montageflansch 35 befestigt ist.

Auf die Außenläuferglocke 17 ist eine beispielsweise aus Leichtmetall bestehende Nabe 37 eines Festplattenspeichers aufgeschoben. Die Nabe 37 dient der Aufnahme einer oder mehrerer Festspeicherplatten. Sie ist in bekannter Weise in einem Raum hoher Reinheit des Speichers untergebracht. Der Montageflansch 35 trägt eine Leiterplatte 38, auf der die Kommutierungselektronik und gegebe-nenfalls weitere Schaltungskomponenten, beispiels-weise für eine Drehzahlregelung, untergebracht sein können. Auf der Leiterplatte 38 sitzen insbesondere auch drei Positionssensoren 42, 43, 44, bei denen es sich im dargestellten Ausführungsbei-spiel um Magnetfeldsensoren, beispielsweise Hall-generatoren, Feldplatten, Magnetdioden oder der-gleichen handelt. Besonders vorteilhaft sind bistabil schaltende Hall-ICs. Die Anwendung von 180°el breiten Rotorpolen 15, 16 gestattet es, als Steuermagneten für die Positionssensoren 42, 43, 44 unmittelbar den Hauptmagneten, d.h. den Permanentmagnetring 13, zu verwenden, wie dies in der linken Hälfte der Fig. 2 angedeutet ist. Es kann, falls erwünscht, aber auch ein gesonderter Steuermagnet 45 für die Positionssensoren vorhanden sein. Dies ist in der Rechten Hälfte der Fig. 2 angedeutet. Bei den Ausführungsformen gemäß Fig. 2 stehen die Positionssensoren 42, 43, 44 dem sie steuernden Magneten 13 bzw. 45 axial gegenüber. Es ist aber beispielsweise auch möglich, die Positionssensoren in der in Fig. 2 mit gestrichelten Linien angedeuteten Weise so anzuordnen, daß sie dem steuernden Magneten, in diesem Fall dem Permanentmagnetring 13, radial gegenüberstehen. In jedem Fall ist es wichtig, die Positionssensoren 42, 43, 44 in Umfangsrichtung mit Bezug auf die Spulen 21 bis 26 so zu positionieren, daß die Änderungen der Sensorschaltzustände mit den Nulldurchgängen der zugeordneten induzierten Spulenspannungen im wesentlichen zusammenfallen. Dies wird bei der veranschaulichten Ausführungsform gemäß Fig. 1 dadurch erreicht, daß die Positionssensoren mit Bezug auf die Mitte der Nutöffnungen 28A, 28B und 28C um $15°_{mech}$ versetzt sind.

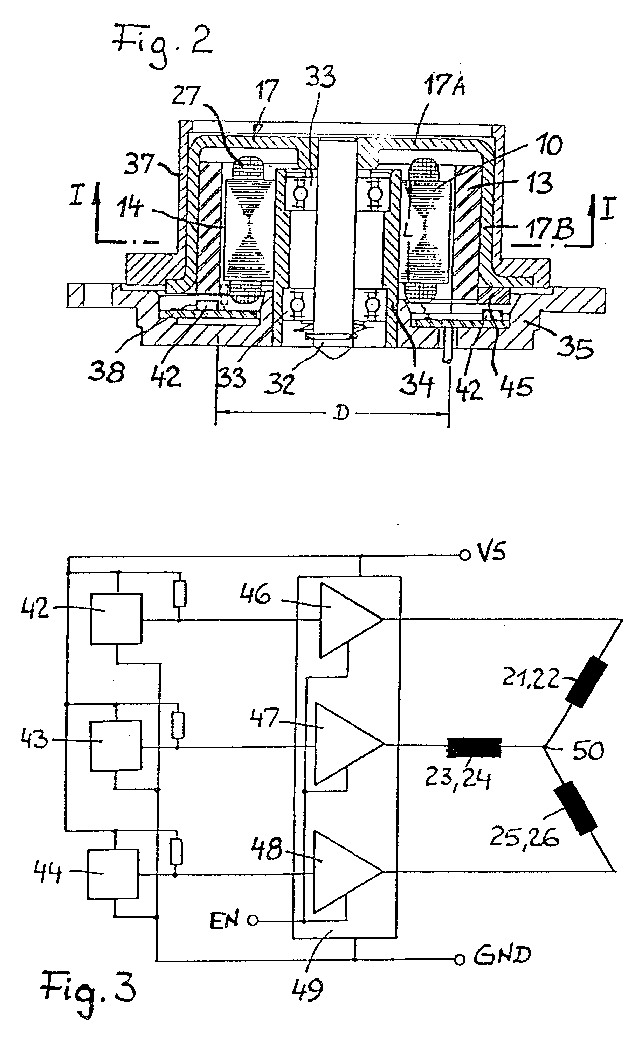

Entsprechend Fig. 3 sind die drei Wicklungsstränge 21, 22; 23, 24; 25, 26 in Stern geschaltet. Die Ausgänge der Positionssensoren 42, 43, 44 sind unmittelbar an die Eingänge jeweils eines Treiberverstärkers 46, 47 bzw. 48 einer Endstufe 49 angeschlossen. Die Ausgänge der Treiberverstärker 46, 47, 48 sind ihrerseits an die vom Sternpunkt 50 abliegenden Enden der Spulenpaare 21, 22; 23, 24 bzw. 25, 26 angeschlossen. Versorgungsspannung liegt an den Klemmen VS bzw. GND an. Ein Entsperrsignal wird der Endstufe 49 über einen Anschluß EN zugeführt.

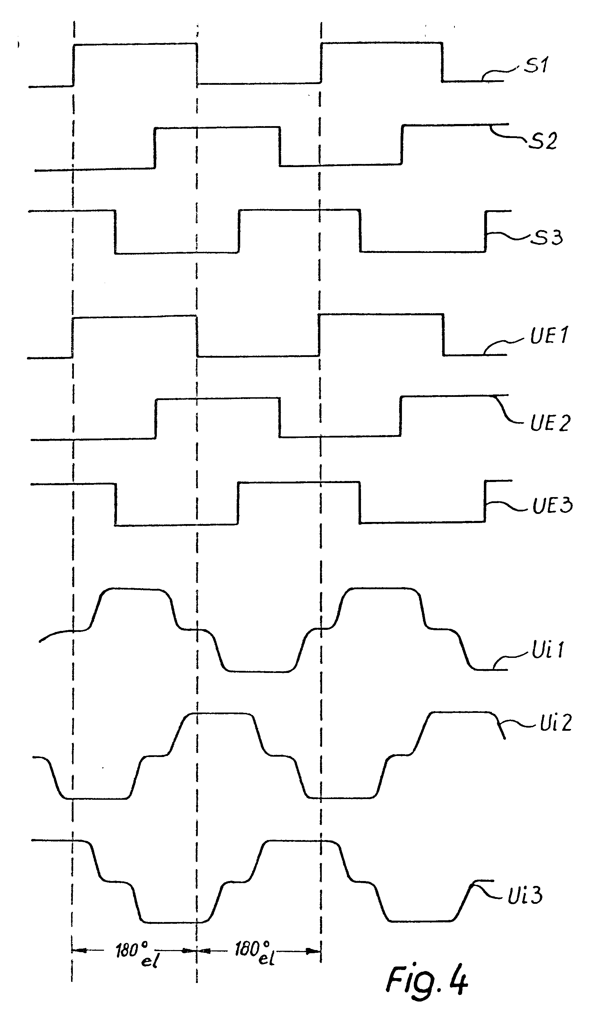

Die Positionssensoren 42, 43, 44 liefern drei um $120°_{el}$ gegeneinander versetzte, jeweils nach $180°_{el}$ umspringende Sensorausgangssignale, die in Fig. 4 mit S1, S2 und S3 bezeichnet sind. Diese Signale werden von den Treiberverstärkern 46, 47, 48 der Endstufe 49 lediglich verstärkt. Die entsprechend verstärkten Endstufenspannungen (gegenüber dem Bezugspotential GND) sind in Fig. 4 mit UE1, UE2 und UE3 bezeichnet. In den Spulenpaaren 21, 22; 23, 24; 25, 26 wird von dem Permanentmagnetring 13 jeweils eine dreistufig getreppte Spannung induziert. Diese gegenüber dem Sternpunkt 50 gemessenen Spannungen sind in Fig. 4 bei Ui1, Ui2 und Ui3 dargestellt. Wie veranschaulicht ist, sind die induzierten Spannungen Ui1, Ui2, Ui3 über jeweils etwa $120°_{el}$ positiv und etwa $120°_{el}$ negativ. Dazwischen befindet sich ein etwa $60°_{el}$ breiter Bereich, innerhalb dessen die induzierte Spannung einen wesentlich verminderten Wert hat und in dessen Mitte die induzierte Spannung den Nullpunkt durchläuft. Dieser $60°_{el}$ breite Bereich ist vorliegend kurz als Nullspannungsbereich bezeichnet.

Wie die Fig. 4 erkennen läßt, fallen die Änderungen der Schaltzustände der Positionssensoren 42, 43, 44, d.h., die Sprünge der Signale S1, S2, S3, mit den Nulldurchgängen der zugeordneten induzierten Spulenspannungen Ui1, Ui2 bzw. Ui3 zusammen. Aus Fig. 4 folgt weiter, daß die induzierten Spulenspannungen Ui1, Ui2, Ui3 die Bedingung erfüllen, daß ihre Summe in jeder Relativstellung zwischen dem Permanentmagnetring 13 und der von den Spulen 21 bis 26 gebildeten Wicklung gleich Null ist. Die Erfindung ist jedoch nicht auf die veranschaulichte Form der induzierten Treppenspannungen beschränkt. Beispielsweise könnten die induzierten Spannungen auch Sinusform haben.

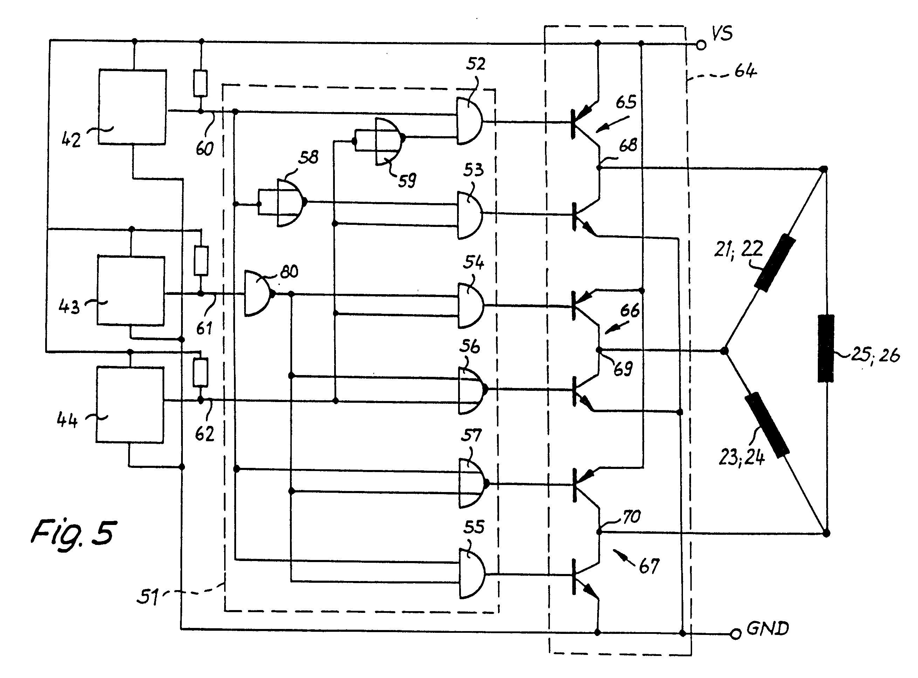

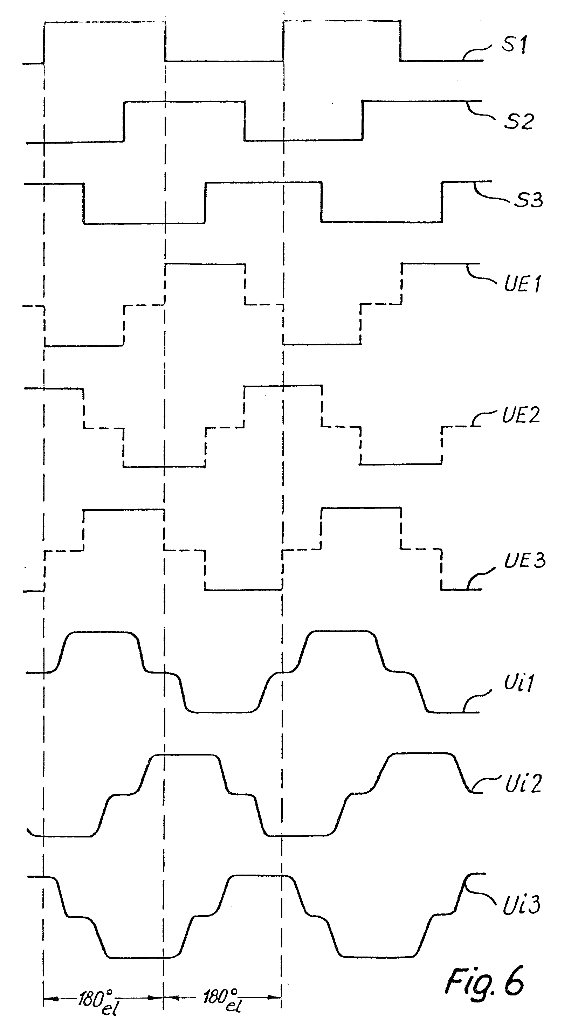

Bei der abgewandelten Ausführungsform gemäß den Fign. 5 und 6 sind die Wicklungsspulen 21, 22; 23, 24 und 25, 26 in Dreieck geschaltet. Zwischen den Ausgängen der Positionssensoren 42, 43, 44 und den Eingängen der Endstufe 49 liegt ein Decoder 51, der in an sich bekannter Weise aus UND-Schaltungen 52, 53, 54 und 55, NAND-Schaltungen 56, 57 und Invertern 58, 80, 59 aufgebaut ist. Der Decoder 51 leitet aus den an seinen drei Eingängen 60, 61, 62 anliegenden Sensorausgangssignalen sechs Eingangssignale für die Endstufe 64 ab. Die Endstufe 64 weist drei Treiberstufen 65, 66, 67 auf, die jeweils in Form von Halbbrücken mit zwei ausgangsseitig in Reihe geschalteten Halbleiterstufen, z.B. Endstufentransistoren oder Thyristoren, aufgebaut sind. Mit Wicklungsanschlußklemmen 68, 69, 70 der Endstufe 64 sind die in Dreieck geschalteten Wicklungsspulen 21, 22; 23, 24 und 25, 26 verbunden. Der Decoder 51 ist derart ausgelegt, daß an den Wicklungsanschlußklemmen 68, 69, 70 - bezogen auf das Potential GND - Endstufenspannungen UE1, UE2 und UE3 der in Fig. 6 veranschaulichten Form auftreten. Wie aus Fig. 6 hervorgeht, sind die Endstufen- oder Treiberspannungen UE1, UE2 und UE3 wiederum um $120°_{el}$ gegeneinander versetzt. Die Spannungen sind während jeweils zweier aufeinanderfolgender $180°_{el}$-Halbperioden der Sensorausgangssignale S1, S2, S3 jeweils für $120°_{el}$ positiv und für $120°_{el}$ negativ. Die $120°_{el}$-Bereiche der Spannungen UE1, UE2, UE3 sind jeweils durch $60°_{el}$-Bereiche voneinander getrennt, während deren die betreffende Wicklungsanschlußklemme 68, 69, 70 abgeschaltet ist. In den Spulenpaaren 21, 22; 23, 24 und 25, 26 werden wiederum dreistufig getreppte Spannungen induziert, die die in Fig. 6 bei Ui1, Ui2 bzw. Ui3 veranschaulichte Form haben. Die Bedingungen sind also analog denen der zuvor beschriebenen Ausführungsform.

Festzuhalten ist, daß in den Fign. 4 und 6 die relativen zeitlichen Lagen der verschiedenen Signale maßstabsgerecht dargestellt sind.

Entsprechend Fig. 2 ist der Motor platzsparend in der Plattenspeichernabe 37 untergebracht. Wegen der hohen Konstanz des vom Motor abgegebenen Drehmoments muß das Spitzendrehmoment nur ausreichen, um die beim Anlauf des Plattenspeichers auftretenden großen Reibungskräfte zu überwinden. Im Gegensatz dazu mußte bei Motoren mit starken Drehmomenteinbrüchen bereits das z.B. nur 60 % des Spitzendrehmoments ausmachende Minimaldrehmoment diese Bedingung erfüllen. Das Spitzendrehmoment mußte infolgedessen entsprechend höher gewählt werden. Die vorliegend erreichten minimalen Drehmomentschwankungen gestatten eine besonders günstige Dimensionierung des Motors sowohl im Anlaufpunkt als auch im Nenndrehpunkt.

Das erläuterte Prinzip läßt sich nicht nur bei rotierenden Antrieben, sondern auch bei Linearantrieben mit Vorteil einsetzen. Dabei kann der Linearmotor im übrigen beispielsweise in der aus der DE-OS 31 23 441 bekannten Weise aufgebaut sein.

**Patentansprüche**

1. Kollektorloser Dreiphasen-Gleichstrommotor mit einer Permanentmagnetanordnung (13) und einer dreisträngigen Wicklung (21, 22, 23, 24, 25, 26), die gegeneinander bewegbar sind, sowie mit drei mit Bezug auf die Wicklung feststehenden, von der Permanentmagnetanordnung gesteuerten Positionssensoren (42, 43, 44) zum Anliefern von Sensorausgangssignalen (S1, S2, S3), die jeweils während $180°_{el}$ auf einem ersten Potential und während der anschließenden $180°_{el}$ auf einem zweiten Potential liegen, wobei die Wicklungsspulen in Abhängigkeit von den um $120°_{el}$ gegeneinander versetzten Sensorausgangssignalen in zyklischer Folge mit Strom beaufschlagt werden, und wobei aufgrund der gegenseitigen Bewegung der Permanentmagnetanordnung und der Wicklung von der Permanentmagnetanordnung in den einzelnen Wicklungsspulen (21, 22, 23, 24, 25, 26) um $120°_{el}$ versetzte Spulenspannungen (Ui1, Ui2, Ui3) induziert werden, die unter Durchlaufen von Nulldurchgängen wechselweise in einem Bereich von maximal $180°_{el}$ positiv und in einem Bereich von maximal $180°_{el}$ negativ sind und deren Summe in jeder Relativstellung zwischen der Magnetanordnung und der Wicklung gleich Null ist, **dadurch gekennzeichnet,** daß die Positionssensoren (42, 43, 44) mit Bezug auf die Wicklungsspulen (21, 22, 23, 24, 25, 26) derart angeordnet sind, daß die Änderungen der Sensorschaltzustände mit den Nulldurchgängen der zugeordneten induzierten Spulenspannungen (Ui1, Ui2, Ui3) im wesentlichen zusammenfallen, und daß die Wicklungsspulen über Wicklungstreiberstufen (46, 47, 48; 65, 66, 67) mit den Sensorausgangssignalen (S1, S2, S3) unmittelbar entsprechenden oder aus den Sensorausgangssignalen abgeleiteten Treiberspannungen (UE1, UE2, UE3) beaufschlagt sind.

2. Gleichstrommotor nach Anspruch 1, dadurch gekennzeichnet, daß die Wicklungsspulen in Stern geschaltet und die Wicklungstreiberstufen an die Positionssensoren unmittelbar angekoppelt sind.

3. Gleichstrommotor nach Anspruch 1, dadurch gekennzeichnet, daß die Wicklungsspulen in Dreieck geschaltet sind und zwischen die Positionssensoren und die Wicklungstreiberstufen ein Decoder geschaltet ist, der bewirkt, daß die Treiberspannungen während jeweils zweier aufeinanderfolgender $180°_{el}$-Halbperioden der Sensorausgangssignale jeweils für $120°_{el}$ positiv und für $120°_{el}$ negativ sind und während der beiden $60°_{el}$-Bereiche zwischen den aufeinanderfolgenden $120°_{el}$-Bereichen die betreffende Wicklungsanschlußklemme abgeschaltet ist.

4. Gleichstrommotor nach einem der vorhergehenden Ansprüche, dadurch gekennzeichnet, daß der Motor einen im wesentlichen zylindrischen Luftspalt hat und die Permanentmagnetanordnung Teil eines Außenrotors ist.

5. Gleichstrommotor nach einem der Ansprüche 1 bis 3, dadurch gekennzeichnet, daß der Motor als Linearmotor mit im wesentlichen ebenem Luftspalt ausgelegt ist.

6. Gleichstrommotor nach Anspruch 4, dadurch gekennzeichnet, daß der Rotor vierpolig ausgebildet ist.

7. Gleichstrommotor nach einem der vorhergehenden Ansprüche, dadurch gekennzeichnet, daß die einzelnen Wicklungsspulen jeweils um einen Pol eines zusammen mit der Permanentmagnetanordnung einen Luftspalt bildenden, genuteten Flußführungsteils mit zur Bewegungsrichtung bzw. zur Tangente an die jeweilige Bewegungsrichtung senkrecht stehender Spulenachse überlappungsfrei herumgelegt sind, das Verhältnis von Spulenteilung zum Magnetteilung 2:3 beträgt, die einzelnen induzierten Spulenspannungen dreistufig getreppte Spannungen sind, die jeweils über etwa $120°_{el}$ positiv, über etwa $60°_{el}$ gleich oder nahezu gleich Null und über etwa $120°_{el}$ negativ sind, und die Positionssensoren so angeordnet sind, daß sie ihren Schaltzustand im wesentlichen in der Mitte des 60$^\circ_{el}$-Nullspannungsbereichs der zugeordneten induzierten Spannung ändern.

8. Anwendung des Gleichstrommotors nach einem der Ansprüche 4, 6 und 7 für den Antrieb von signalverarbeitenden Geräten, insbesondere Plattenspeichern.

9. Anwendung nach Anspruch 8 bei einem Festplattenspeicher mit einer Nabe zur Aufnahme mindestens einer Festspeicherplatte, wobei der Gleichstrommotor mindestens zu einem wesentlichen Teil innerhalb der Nabe untergebracht ist.

10. Anwendung des Gleichstrommotors nach einem der Ansprüche 4, 6 und 7 bei einem Magnetbandgerät als direkt antreibender Kapstan- und/oder Wickelmotor.

**Claims**

1. Brushless three-phase direct current motor with a permanent magnet arrangement (13) and a three-phase winding (21,22,23,24,25,26), which are movable relative to one another, as well as with three position sensors (42,43,44) fixed with respect to the winding and controlled by the permanent magnet arrangement for supplying sensor output signals (S1,S2,S3), which are in each case at a first potential for 180° el and at a second potential during the following 180° el, the winding coils being energized with current as a function of the sensor output signals reciprocately displaced by 120° el in a cyclic sequence and in which as a result of the reciprocal movement of the permanent magnet arrangement and the winding coil voltages (Ui1,Ui2,Ui3) displaced by 120° el are induced in the individual winding coils (21,22,23,24,25,26) and, accompanied by zero passages, are alternatively positive in a range of max. 180° el and negative in a range of max. 180° el and whose sum in each relative position between the magnet arrangement and the coil is equal to zero, characterized in that the position sensors (42,43,44) are so arranged with respect to the winding coils (21,22,23,24,25, 26) that the changes in the sensor switching states substantially coincide with the zero passages of the associated induced coil voltages (Ui1,Ui2,Ui3) and that the winding coils are supplied by means of winding driver stages (46,47,48; 65,66,67) with driver voltages (UE1,UE2,UE3) directly corresponding to the sensor output signals (S1,S2,S3) or derived from the sensor output signals.

2. Direct current motor according to claim 1, characterized in that the winding coils are Y-connected and the winding driver stages are directly coupled to the position sensors.

3. Direct current motor according to claim 1, characterized in that the winding coils are delta-connected and a decoder is connected between the position sensors and the winding driver stages, so that the driver voltages are in each case positive for 120° el and negative for 120° el during two successive 180° el half-periods of the sensor output signals and during the two 60° el ranges between the successive 120° el ranges the winding terminal is disconnected.

4. Direct current motor according to one of the preceding claims, characterized in that the motor has a substantially cylindrical air gap and the permanent magnet arrangement is part of an external rotor.

5. Direct current motor according to one of the claims 1 to 3, characterized in that the motor is designed as a linear motor with a substantially planar air gap.

6. Direct current motor according to claim 4, characterized in that the rotor is constructed in four-pole manner.

7. Direct current motor according to any one of the preceding claims, characterized in that the individual winding coils are placed in overlap-free manner around in each case one pole of a slotted flux guidance part forming an air gap with the permanent magnet arrangement and each coil axis is perpendicular to the movement direction or to the tangent thereto, the ratio of the coil pitch to the magnet pitch being 2:3 and the individual induced coil voltages are three-stage, stepped voltages, which are in each case positive over approximately 120° el, equal to or almost equal to zero over approximately 60° el and negative over approximately 120° el, the position sensors being arranged in such a way that they modify their switching state substantially in the centre of the 60° el zero voltage range of the associated induced voltage.

8. Use of the direct current motor according to one of the claims 4,6 and 7 for driving signal-processing equipment, particularly disk memories.

9. Use according to claim 8 in a hard disk memory with a hub for receiving at least one hard storage plate, the d.c. motor at least substantially being housed within the hub.

10. Use of the direct current motor according to one of the claims 4,6 and 7 in a magnetic tape unit as a directly driving capstan and/or reel motor.

**Revendications**

1. Moteur à courant continu triphasé sans collecteur comprenant un dispositif à aimant permanent (13) et un bobinage à trois branches (21, 22, 23, 24, 25, 26) qui peuvent être déplacés l'un par rapport à l'autre, et comprenant aussi trois capteurs de position (42, 43, 44) qui sont fixes par rapport au bobinage, qui sont commandés par le dispositif à aimant permanent et qui sont destinés à fournir des signaux de sortie des capteurs (S1, S2, S3), lesquels sont à chaque fois situés à un premier potentiel pendant $180°_{él}$ et à un second potentiel pendant les $180°_{él}$ suivants, cependant que les bobines du bobinage sont soumises au courant selon une séquence cyclique en fonction des signaux de sortie des capteurs qui sont décalés de $120°_{él}$ les uns par rapport aux autres, et que, du fait du déplacement relatif du dispositif à aimant permanent et du bobinage, des tensions de bobine (Ui1, Ui2, Ui3) décalées de $120°_{él}$ sont induites par le dispositif à aimant permanent dans les diverses bobines (21, 22, 23, 24, 25, 26) du bobinage en étant alternativement positives dans une zone de $180°_{él}$ au maximum et négatives dans une zone de $180°_{él}$ au maximum, avec une traversée de passages par le zéro, et leur somme étant égale à zéro pour chaque position relative du dispositif à aimant et du bobinage, caractérisé par le fait que les capteurs de position (42, 43, 44) sont disposés par rapport aux bobines (21, 22, 23, 24, 25, 26) du bobinage de telle manière que les modifications des états de commutation des capteurs coïncident pour l'essentiel avec les passages par le zéro des tensions de bobine induites associées (Ui1, Ui2, Ui3), et par le fait que les bobines du bobinage sont soumises, par l'intermédiaire d'étages d'excitation du bobinage (46, 47, 48 ; 65, 66, 67), à l'action de tensions d'excitation (UE1, UE2, UE3) correspondant directement aux signaux de sortie des capteurs (S1, S2, S3) ou dérivées des signaux de sortie des capteurs.

2. Moteur à courant continu selon la revendication 1, caractérisé par le fait que les bobines du bobinage sont montées en étoile, et que les étages d'excitation du bobinage sont couplés directement aux capteurs de position.

3. Moteur à courant continu selon la revendication 1, caractérisé par le fait que les bobines du bobinage sont montées en triangle, et qu'entre les capteurs de position et les étages d'excitation du bobinage est monté un décodeur qui fait en sorte que les tensions d'excitation soient à chaque fois positives sur $120°_{él}$ et négatives sur $120°_{él}$ pendant chacune de deux demi-périodes consécutives des signaux de sortie des capteurs s'étendant sur $180°_{él}$, et que la borne de raccordement du bobinage qui est concernée soit déconnectée pendant les deux zones s'étendant sur $60°_{él}$ qui sont situées entre les zones consécutives s'étendant sur $120°_{él}$.

4. Moteur à courant continu selon l'une des revendications précédentes, caractérisé par le fait que le moteur comporte un entrefer qui est cylindrique pour l'essentiel, et que le dispositif à aimant permanent est une partie d'un rotor extérieur.

5. Moteur à courant continu selon l'une des revendications 1 à 3, caractérisé par le fait que le moteur est conçu sous la forme d'un moteur linéaire comprenant un entrefer qui est plan pour l'essentiel.

6. Moteur à courant continu selon la revendication 4, caractérisé par le fait que le rotor est réalisé sous forme quadripolaire.

7. Moteur à courant continu selon l'une des revendications précédentes, caractérisé par le fait que les diverses bobines du bobinage sont à chaque fois posées sans chevauchement autour d'un pôle d'une pièce de guidage du flux à encoches qui constitue un entrefer avec le dispositif à aimant permanent, l'axe de la bobine étant situé perpendiculairement à la direction du déplacement ou, respectivement, à la tangente à la direction du déplacement correspondante, que le rapport entre le pas des bobines et le pas de l'aimant est de 2/3, que les diverses tensions induites dans les bobines sont des tensions étagées à trois étages qui sont à chaque fois positives sur $120°_{él}$ environ, égales à zéro ou presque égales à zéro sur $60°_{él}$ environ, et négatives sur $120°_{él}$ environ, et que les capteurs de position sont disposés de telle manière que, pour l'essentiel, ils changent leur état de commutation au milieu de la zone à tension nulle s'étendant sur

$60°_{él}$ de la tension induite associée.

8. Utilisation du moteur à courant continu selon l'une des revendications 4, 6 et 7 pour l'entraînement d'appareils de traitement de signaux, et en particulier de mémoires à disques.

9. Utilisation selon la revendication 8 dans une mémoire morte à disque comprenant un moyeu destiné à recevoir au moins un disque de mémoire morte, le moteur à courant continu étant logé à l'intérieur du moyeu, du moins pour une part importante.

10. Utilisation du moteur à courant continu selon l'une des revendications 4, 6 et 7 dans un appareil à bande magnétique sous la forme d'un moteur cabestan et/ou d'un moteur enrouleur à entraînement direct.

_Fig. 1_

# Fig. 2

# Fig. 3

Fig. 4

Fig. 5

13

Fig. 6

$180^{\circ}_{el}$    $180^{\circ}_{el}$

S1
S2
S3
UE1
UE2
UE3
Ui1
Ui2
Ui3